# EUROPEAN PATENT APPLICATION

(11) **EP 4 753 210 A1**
(43) Date of publication of application: **03.06.2026**
(21) Application number: 25211010.1
(22) Date of filing: 24.10.2025
(51) Int. Cl.: H04L 9/40, G06F 21/56

(54) **METHODS AND APPARATUS FOR ARTIFICIAL INTELLIGENCE (AI) MODEL SECURITY PROTECTION USING MOVING TARGET DEFENSES**

(30) Priority: 02.12.2024 US 202418965769
(71) Applicant: INTEL Corporation, Santa Clara, CA 95054 (US)
(72) Inventor: BEN-SHALOM, Omer, 7503355 Rishon Le-Tzion (IL); KAHANA, Yoni, 40692 Ein Sarid (IL); KLEIN, Yaron, 48622 Rosh HaAyin (IL); BLUM SHEM-TOV, Ilil, 3655343 Kiryat Tivon (IL); HOROVITZ, Dan, 7578229 Rishon Letzion (IL)
(74) Representative: Rummler, Felix

(57) **Abstract**

An example apparatus includes interface circuitry, machine-readable instructions, and at least one processor circuit to be programmed by the machine-readable instructions to interface circuitry to obtain a pre-trained detection model, machine-readable instructions, and at least one processor circuit to be programmed by the machine-readable instructions to tune the pre-trained detection model based on first local behavior data and execute the tuned detection model to detect an anomaly in second local behavior data associated with the apparatus.

## Description

### BACKGROUND

Malware endpoint protection provides defenses against malicious software. Malicious software can include ransomware that encrypts valuable data or trojans that create backdoors for adversarial attacks.

### BRIEF DESCRIPTION OF THE DRAWINGS

FIG. 1 is a block diagram of an example implementation of malware detector circuitry constructed in accordance with teachings of this disclosure for AI-based security protection using moving target defenses.
FIG. 2 is a flowchart representative of example machine-readable instructions and/or example operations that may be executed, instantiated, and/or performed by example programmable circuitry to implement the example malware detector circuitry of FIG. 1.
FIG. 3 is a flowchart representative of example machine-readable instructions and/or example operations that may be executed, instantiated, and/or performed by example programmable circuitry to implement a computing system of FIG. 1 to cause the computing system to train a neural network to generate an endpoint detection model.
FIG. 4 is a flowchart representative of example machine-readable instructions and/or example operations that may be executed, instantiated, and/or performed by example programmable circuitry to implement the example malware detector circuitry of FIG. 1 to update the endpoint detection model using fine-tuning.
FIG. 5 is an example process execution sequence diagram for deployment of a fine-tuned endpoint detection model for monitoring of data anomalies in accordance with teachings of this disclosure.
FIG. 6 illustrates example training and inference phases associated with the malware detector circuitry of FIG. 1, including an example response to an adversary attack.
FIG. 7 is a block diagram of an example processing platform including programmable circuitry structured to execute, instantiate, and/or perform the example machine readable instructions and/or perform the example operations of FIGS. 2 and 4 to implement the malware detector circuitry of FIG. 1.
FIG. 8 is a block diagram of an example processing platform including programmable circuitry structured to execute, instantiate, and/or perform the example machine readable instructions and/or perform the example operations of FIG. 3 to implement the computing system of FIG. 1.
FIG. 9 is a block diagram of an example implementation of the programmable circuitry of FIGS. 7-8.
FIG. 10 is a block diagram of another example implementation of the programmable circuitry of FIGS. 7-8.

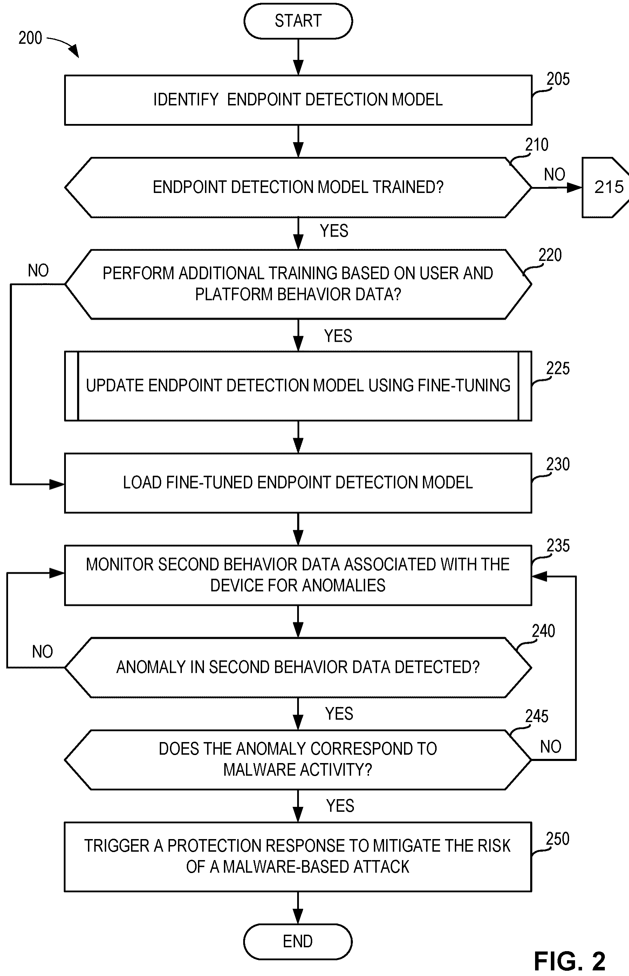

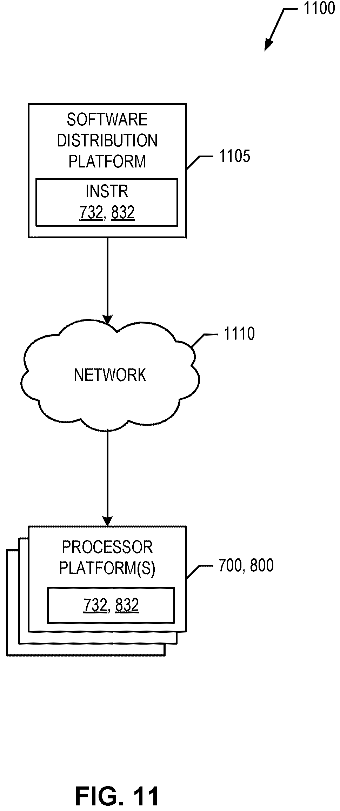

FIG. 11 is a block diagram of an example software/firmware/instructions distribution platform (e.g., one or more servers) to distribute software, instructions, and/or firmware (e.g., corresponding to the example machine readable instructions of FIGS. 2-4) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

### DETAILED DESCRIPTION

Artificial intelligence (AI) and machine learning (ML)-based systems that use classifiers can be incorporated into endpoint detection and response systems and/or antivirus solutions. However, such integration of AI/ML systems can introduce additional vulnerabilities, thereby increasing susceptibility to malware attacks. For example, a malware attack can deliberately manipulate an AI model to cause misclassification of malware as benign, allowing the malware to evade detection. In some examples, adversarial attacks can be used to create slightly altered versions of malware samples to deceive the classifier. As such, AI/ML systems using classifiers are vulnerable to attacks, given that they may be downloaded such that an attacker has unlimited time and/or resources to disable the model in a testing environment in preparation to evade a target classifier. While the target classifier (e.g., used to identify and flag potential malicious activity) interacts with (e.g., may be executed by) a defender (e.g., a system or tool that actively protects against cyber threats), the defender is limited to known attacks (e.g., the defender is not previously exposed to new adversary training and/or obfuscation attacks).

For example, with the increasing use of AI model-based endpoint protection for identifying abnormal execution behavior associated with malicious code, there is a corresponding increase in the injection of foreign binaries into process memories and other similar techniques that can be observed using a variety of methods (e.g., filter drivers, extended Berkeley Packet Filter (eBPF), etc.). Current reliance on fixed, trained classifiers for malware detection does not account for an adversary that tests different alterations and/or obfuscations of code to identify code that will not be flagged by the classifier as malicious. For example, an adversary can repeatedly test the altered and/or obfuscated code against known endpoint protection until the code is no longer flagged, subsequently deploying the malicious payload for interaction with endpoint protection system(s). With the growing use of adversarial AI, the attacker can easily attempt a large number (e.g., infinite) options of code and/or binary alteration until the code is no longer classified as malware, allowing malicious actors to deliberately subvert AI system functionality. As such, the AI system makes incorrect or unintended predictions or decisions when an adversary introduces attacks in the input data, altering the original data or the AI model itself through architecture-based or parameter-based changes. For example, adversarial AI can be used to manipulate autonomous vehicles, medical diagnosis systems, facial recognition systems, and/or any other AI-powered applications.

Using known endpoint protection systems, a static AI model can be manipulated to accept a malicious binary and will not be able to identify the threat even if the AI model is trained to detect such an attack prior to the attacker-based adversarial training and/or malware adaptation. The use of adversarial training allows the attacker to circumvent the existing static defenses much faster and with increasing ease. As such, while current models can be tested before deployment, such models are not verifiable infield, with new adversarial attacks addressed reactively after a significant impact to end users has already occurred.

Improved endpoint protection systems disclosed herein can reduce and/or eliminate the risk of prompt injection attacks (e.g., manipulation of generative AI systems through malicious inputs disguised as legitimate user prompts), data leaks, and/or harmful large language model (LLM) responses from generative AI-based applications. Additionally, improved endpoint protection systems disclosed herein can assist with ensuring data privacy, detecting data exfiltration (e.g., unauthorized removal of data from a computer or server), and/or verifying Web Application Firewall (WAF) security, Application Programming Interface (API) security, and/or AI-based security (e.g., data poisoning, model theft, etc.). While globally pre-trained models are effective in generalized environments, such models are vulnerable to adversarial training, failing to account for unique behaviors and/or usage patterns of individual users and/or devices, and allowing adversaries to exploit these global vulnerabilities to compromise devices.

Methods and apparatus disclosed herein introduce AI-based model security protection using moving target defenses. In examples disclosed herein, a pre-trained endpoint protection model is fine-tuned independently on one or more endpoint device(s) and/or system(s) using system specific derivation. In examples disclosed herein, fine-tuning is performed using Low Rank Adaptation (LoRA), although any other fine-tuning technique can be implemented to tune the model training locally (e.g., using the end point device to perform the fine-tuning based on user and/or platform behavior). As a result of local model adaptation via fine-tuning, each model is tailored to normal behavior locally observed on a target system and as such, each local model is not only different from other local models, but also more accurate as compared to known static models. As such, an attacker training against the fine-tuned local model is not training against all models, resulting in a loss of generalization that no longer guarantees real world evasion success using adversarial AI.

In examples disclosed herein, a model is personalized (e.g., localized) for each device based on observed executable behavior and/or user behavior associated with that particular model. As such, methods and apparatus disclosed herein provide an added layer of protection relative to pre-trained endpoint detection models through a moving target defense, resulting in significantly higher malicious attacker detection even when adversarial learning is used against anti-malware tools deployed on the endpoint. Methods and apparatus disclosed herein enhance endpoint AI model-based security by incorporating user-specific and/or platform-specific observed behavior, making the AI model resilient against attacks that exploit global model vulnerabilities. Through dynamic adaptation to the unique patterns of individual users and devices, methods and apparatus disclosed herein ensure a high level of security and personalization. As such, methods and apparatus disclosed herein achieve robust and personalized device protection by fine-tuning pre-trained AI models locally.

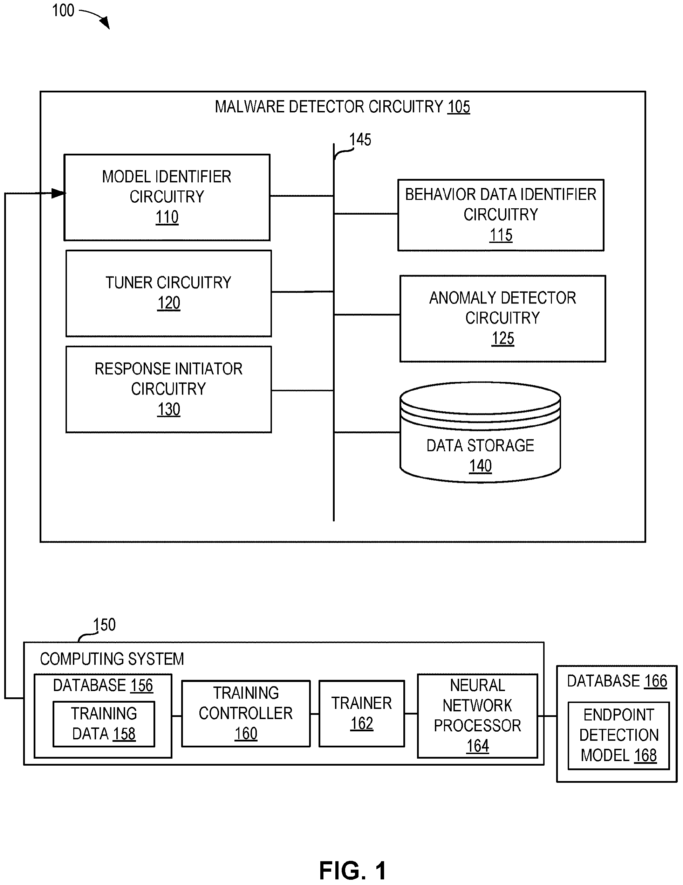

FIG. 1 is a block diagram 100 illustrating an example implementation of malware detector circuitry 105 constructed in accordance with teachings of this disclosure for AI-based model security protection using moving target defenses. The malware detector circuitry 105 of FIG. 1 may be instantiated (e.g., creating an instance of, bring into being for any length of time, materialize, implement, etc.) by programmable circuitry such as a Central Processing Unit (CPU) executing first instructions. Additionally or alternatively, the malware detector circuitry 105 of FIG. 1 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 1 may, thus, be instantiated at the same or different times. Some or all of the circuitry of FIG. 1 may be instantiated, for example, in one or more threads executing concurrently on hardware and/or in series on hardware. Moreover, in some examples, some or all of the circuitry of FIG. 1 may be implemented by microprocessor circuitry executing instructions and/or FPGA circuitry performing operations to implement one or more virtual machines and/or containers.

In the example of FIG. 1, the malware detector circuitry 105 includes example model identifier circuitry 110, example behavior data identifier circuitry 115, example tuner circuitry 120, example anomaly detector circuitry 125, example response initiator circuitry 130, and example data storage 140. In the example of FIG. 1, the model identifier circuitry 110, the behavior data identifier circuity 115, the tuner circuitry 120, the anomaly detector circuitry 125, the response initiator circuitry 130, and the data storage 140 are in communication with an example bus 145.

The model identifier circuitry 110 identifies a pre-trained endpoint detection model. In examples disclosed herein, the endpoint detection model is a robust, globally (e.g., centrally) pre-trained AI model designed for endpoint detection. As described in more detail in connection with the tuner circuitry 120, the endpoint detection model can be used as a base model to be distributed to multiple endpoints. The base model is a pre-trained model but is adapted for integrating Low-Rank Adaptation (LoRA) layers into the pre-trained model to enable efficient local fine-tuning. For example, the endpoint detection model can be part of Endpoint Detection and Response (EDR) cybersecurity for monitoring and responding to threats on endpoints (e.g., physical devices that connect to a network system, including mobile devices, desktop computers, virtual machines, embedded devices, servers, etc.). In some examples, the endpoint detection model can be used for data collection associated with endpoint activities (e.g., file changes, network connections, user activities, etc.), data analysis (e.g., for identification of malicious activity), and/or responses to cybersecurity threats (e.g., blocking malicious activity, disconnecting endpoints, etc.). For example, the endpoint detection model can use behavioral analysis based on local behavior data for real time detection of anomalies and/or potential threats. In some examples, the endpoint detection model can be used to distinguish between benign anomalies and genuine threats. In some examples, the endpoint detection model can be used to automatically isolate an affected endpoint when a potential threat is detected.

As illustrated in FIG. 1, the model identifier circuitry 110 is in communication with a computing system 150 that trains a neural network to generate an example endpoint detection model 168. For example, as described above, the model identifier circuitry 110 identifies a pre-trained endpoint detection model for further fine-tuning. In some examples, the training data used for training during model generation includes local behavioral data, endpoint activity data, and malware detection data. In some examples, the training data is labeled. In some examples, the training data is sub-divided such that a portion of the data is used for validation purposes. In some examples, the malware detector circuitry 105 is implemented by/within the computing system 150.

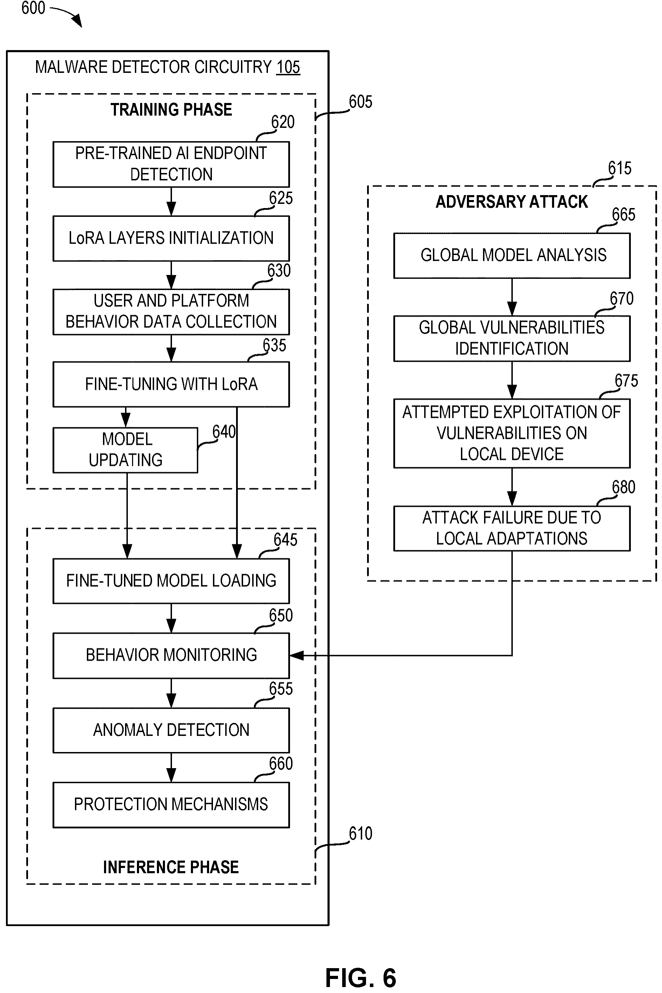

Once training is complete, the endpoint detection model 168 is stored in one or more databases (e.g., database 166 of FIG. 1). Once trained, the deployed model may be operated in an inference phase to process data, as shown in more detail in connection with FIG. 6. In the inference phase, data to be analyzed (e.g., live data) is input to the model, and the model executes to create an output. Moreover, in some examples, the output data may undergo post-processing after it is generated by the AI model to transform the output into a useful result (e.g., a display of data, an instruction to be executed by a machine, etc.). In some examples, output of the deployed model(s) may be captured and provided as feedback. By analyzing the feedback, an accuracy of the deployed model(s) can be determined. If the feedback indicates that the accuracy of the deployed model(s) is less than a threshold or other criterion, training of an updated model can be triggered using the feedback and an updated training data set, hyperparameters, etc., to generate an updated, deployed model(s).

As shown in FIG. 1, the computing system 150 trains a neural network to generate the endpoint detection model 168. The example computing system 150 includes a neural network processor 164. In examples disclosed herein, the neural network processor 164 implements a neural network. The computing system 150 of FIG. 1 also includes a neural network trainer 162. The neural network trainer 162 of FIG. 1 performs training of the neural network implemented by the neural network processor 164.

The computing system 150 of FIG. 1 includes a training controller 160. The training controller 160 instructs the neural network trainer 162 to perform training of the neural network based on training data 158. In the example of FIG. 1, the training data 158 used by the neural network trainer 162 to train the neural network is stored in a database 156. The example database 156 of the illustrated example of FIG. 1 is implemented by any memory, storage device and/or storage disc for storing data such as, for example, flash memory, magnetic media, optical media, etc. Furthermore, the data stored in the example database 156 may be in any data format such as, for example, binary data, comma delimited data, tab delimited data, structured query language (SQL) structures, image data, etc. While the illustrated example database 156 is illustrated as a single element, the database 156 and/or any other data storage elements described herein may be implemented by any number and/or type(s) of memories. The neural network trainer 162 trains the neural network implemented by the neural network processor 164 using the training data 158 to generate the endpoint detection model 168 as a result of the neural network training. The endpoint detection model 168 is stored in a database 166. The databases 156, 166 may be implemented on the same storage device or on different storage devices.

The behavior data identifier circuity 115 of the illustrated example identifies behavior data associated with a device (e.g., a file access pattern, a network activity, a system interaction, etc.). In some examples, the behavior data is associated with user behavior or platform behavior on the device (e.g., usage patterns, interaction styles, other relevant metrics, etc.). However, the behavior data is not limited to endpoint security and control data. The behavior data can also be associated with activities within a browser or an application. For example, the behavior data identifier circuity 115 can identify user activity on application(s) and/or browser(s) used on a local device (e.g., website visits, login locations, application usage frequency, etc.). In examples disclosed herein, the behavior data identifier circuity 115 identifies first behavior data provided to the tuner circuitry 120 for performing local fine-tuning of the pre-trained endpoint detection model. In examples disclosed herein, the behavior data identifier circuity 115 provides second behavior data to the anomaly detector circuitry 125 for monitoring the second behavior data for anomalies as part of malware detection. In some examples, the behavior data identifier circuity 115 modifies the first behavior data and/or the second behavior data collection frequency, quantity, and/or data type based on the endpoint detection model adaptation.

The tuner circuitry 120 of the illustrated example performs fine-tuning of the pre-trained endpoint detection model. In examples disclosed herein, the tuner circuitry 120 performs fine-tuning using Low-Rank Adaptation (LoRA). However, any other type(s) of fine-tuning technique(s) can be implemented. Fine-tuning includes training a pre-trained model on smaller datasets to refine model capabilities and improve performance in a particular task or domain. For example, application of the LoRA technique enables faster fine-tuning and less memory consumption, making the model more suitable for specific tasks without the need for expensive full fine-tuning. As such, pre-trained LLMs (e.g., pre-trained endpoint detection model 168) can be adapted to more specialized tasks. While obtaining large quantities of labeled data for a specific task or domain can be challenging, fine-tuning allows the use of pre-existing labeled data more effectively by adapting the pre-trained LLM to the available labeled dataset. In examples disclosed herein, the tuner circuitry 120 integrates LoRA layers into the pre-trained endpoint detection model 168 to enable efficient local fine-tuning. In examples disclosed herein, the tuner circuitry 120 uses the collected user-based and/or platform-based behavior data (e.g., first behavior data, second behavior data obtained using behavior data identifier circuity 115) to fine-tune the model. The low-rank layers are adjusted to better fit the behavior data, adapting the model to the specific context of the device and user. In some examples, the tuner circuitry 120 updates the pre-trained endpoint model by integrating the fine-tuned parameters into the model, preparing the model for further deployment on a local machine.

In examples disclosed herein, the adaptation efficiency is improved using the integrated LoRA layers, which allow for efficient fine-tuning with little (e.g., minimal) additional computational overhead, making such fine-tuning feasible for local devices with limited resources. For example, the tuner circuitry 120 integrates LoRA layers into the pre-trained endpoint detection model 168, receives the pre-trained model with integrated LoRA layers, and prepares the model for fine-tuning with local data. Subsequently, the tuner circuitry 120 fine-tunes the pre-trained model using behavior data collected from the local device and adapts the model to the local context based on the behavior data. In some examples, the tuner circuitry 120 stores the fine-tuned version of the endpoint detection model in the local data storage 140. In some examples, the tuner circuitry 120 deploys the fine-tuned model for use as part of real-time malware monitoring analysis.

The anomaly detector circuitry 125 monitors user and/or platform behavior to determine whether the behavior aligns with expected usage patterns. In examples disclosed herein, the anomaly detector circuitry 125 detects anomalies using the fine-tuned pre-trained endpoint detection model 168 to detect any deviations from normal behavior (as reflected in local data) that could indicate a potential malware attack. In examples disclosed herein, the anomaly detector circuitry 125 reports anomalies to the response initiator circuitry 130. For example, the anomaly detector circuitry 125 identifies system data related to network traffic, file access patterns, and/or user activity to determine whether there are any deviations. In some examples, the anomaly detector circuitry 125 identifies data deviations associated with browser activity or application activity. In examples disclosed herein, the anomaly detector circuitry 125 uses the fine-tuned endpoint detection model to differentiate anomalies from noise and/or other deviations from the norm. In some examples, both local and global behavior data is used in training.

The response initiator circuitry 130 triggers detection and protection mechanisms based on the received anomaly data. For example, if an anomaly is detected, the response initiator circuitry 130 initiates and/or activates one or more protection mechanisms to mitigate the risk of a malware attack. In some examples, the response initiator circuitry 130 initiates a mitigation action such as quarantining suspicious files, blocking malicious network connections, and/or alerting the user to the threat. In some examples, the response initiator circuitry 130 initiates a mitigation action specific to the identified anomaly (e.g., an anomaly in behavior data associated with browser activity, application activity, etc.). For example, the response initiator circuitry 130 can implement measures to secure applications (e.g., third-party commercial software applications, operating system package applications, etc.) from malware (e.g., using access controls, authentication protocols, encryption, etc.). In examples disclosed herein, the malware detection system is highly sensitive to the specific behaviors and usage patterns of the individual user device, making the detection system more effective at identifying and mitigating malware that might go undetected by a generic, globally-trained model.

The data storage 140 can be used to store any information associated with the model identifier circuitry 110, the behavior data identifier circuity 115, the tuner circuitry 120, the anomaly detector circuitry 125, and/or the response initiator circuitry 130. The data storage 140 of the illustrated example of FIG. 1 can be implemented by any memory, storage device and/or storage disc for storing data such as flash memory, magnetic media, optical media, etc. Furthermore, the data stored in the data storage 140 can be in any data format such as binary data, comma delimited data, tab delimited data, structured query language (SQL) structures, image data, etc.

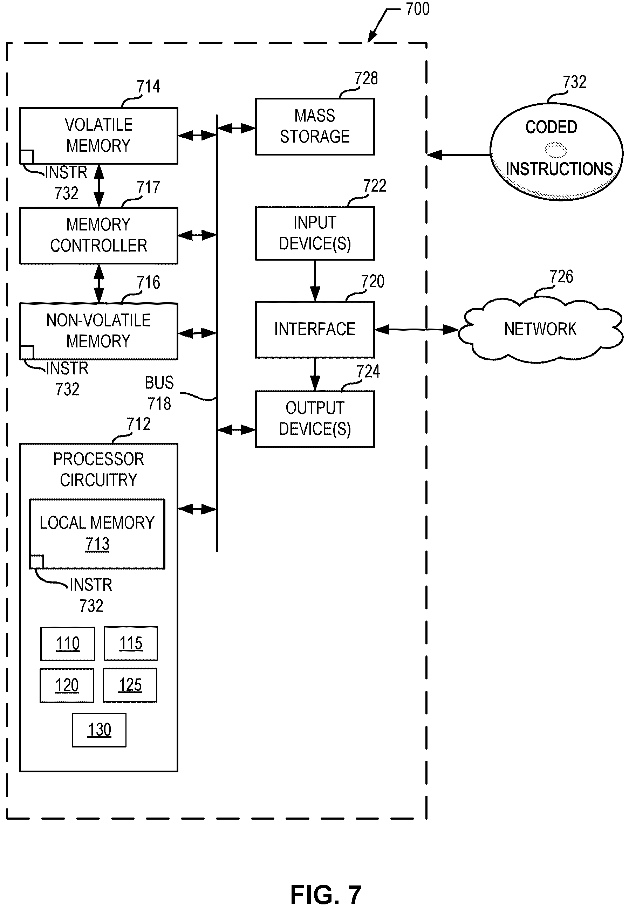

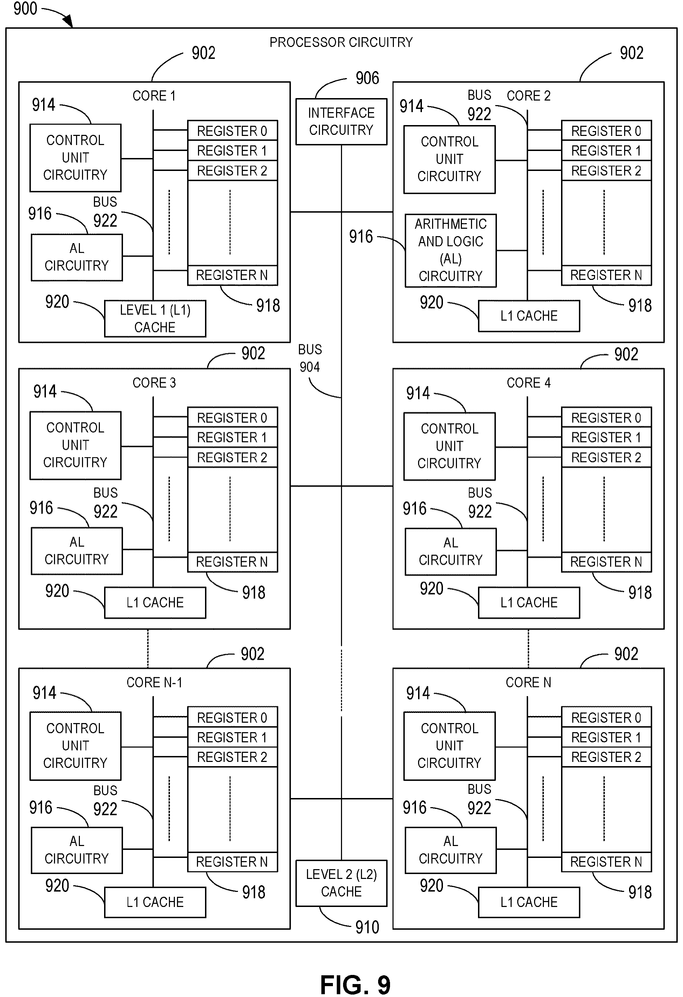

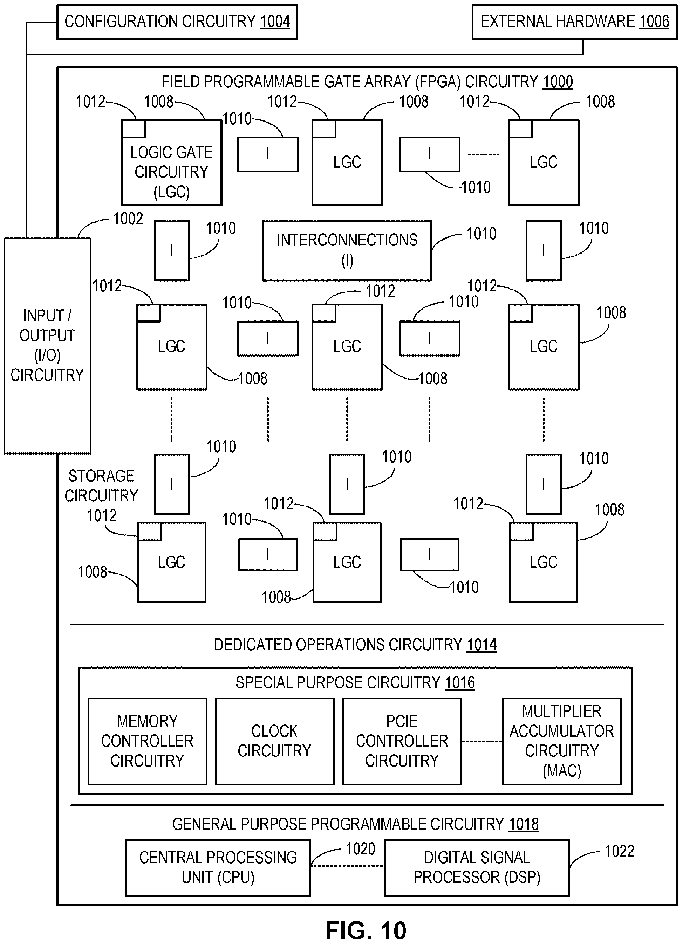

In some examples, the apparatus includes means for identifying a model. For example, the means for identifying a model may be implemented by model identifier circuitry 110. In some examples, the model identifier circuitry 110 may be instantiated by programmable circuitry such as the example programmable circuitry 712 of FIG. 7. For instance, the model identifier circuitry 110 may be instantiated by the example microprocessor 900 of FIG. 9 executing machine executable instructions such as those implemented by at least block 205 of FIG. 2. In some examples, the model identifier circuitry 110 may be instantiated by hardware logic circuitry, which may be implemented by an ASIC, XPU, or the FPGA circuitry 1000 of FIG. 10 structured to perform operations corresponding to the machine readable instructions. Additionally or alternatively, the model identifier circuitry 110 may be instantiated by any other combination of hardware, software, and/or firmware. For example, the model identifier circuitry 110 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

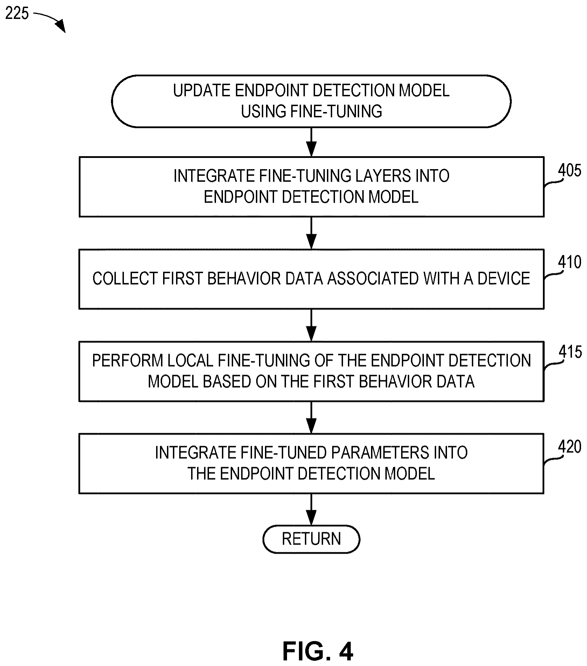

In some examples, the apparatus includes means for collecting data. For example, the means for collecting data may be implemented by behavior data identifier circuitry 115. In some examples, the behavior data identifier circuitry 115 may be instantiated by programmable circuitry such as the example programmable circuitry 712 of FIG. 7. For instance, the behavior data identifier circuitry 115 may be instantiated by the example microprocessor 900 of FIG. 9 executing machine executable instructions such as those implemented by at least block 410 of FIG. 4. In some examples, the behavior data identifier circuitry 115 may be instantiated by hardware logic circuitry, which may be implemented by an ASIC, XPU, or the FPGA circuitry 1000 of FIG. 10 structured to perform operations corresponding to the machine readable instructions. Additionally or alternatively, the behavior data identifier circuitry 115 may be instantiated by any other combination of hardware, software, and/or firmware. For example, the behavior data identifier circuitry 115 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

In some examples, the apparatus includes means for tuning. For example, the means for tuning may be implemented by tuner circuitry 120. In some examples, the tuner circuitry 120 may be instantiated by programmable circuitry such as the example programmable circuitry 712 of FIG. 7. For instance, the tuner circuitry 120 may be instantiated by the example microprocessor 900 of FIG. 9 executing machine executable instructions such as those implemented by at least block 415 of FIG. 4. In some examples, the tuner circuitry 120 may be instantiated by hardware logic circuitry, which may be implemented by an ASIC, XPU, or the FPGA circuitry 1000 of FIG. 10 structured to perform operations corresponding to the machine readable instructions. Additionally or alternatively, the tuner circuitry 120 may be instantiated by any other combination of hardware, software, and/or firmware. For example, the tuner circuitry 120 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

In some examples, the apparatus includes means for executing the tuned detection model. For example, the means for executing the tuned detection model may be implemented by anomaly detector circuitry 125. In some examples, the anomaly detector circuitry 125 may be instantiated by programmable circuitry such as the example programmable circuitry 712 of FIG. 7. For instance, the anomaly detector circuitry 125 may be instantiated by the example microprocessor 900 of FIG. 9 executing machine executable instructions such as those implemented by at least block 235 of FIG. 2. In some examples, the anomaly detector circuitry 125 may be instantiated by hardware logic circuitry, which may be implemented by an ASIC, XPU, or the FPGA circuitry 1000 of FIG. 10 structured to perform operations corresponding to the machine readable instructions. Additionally or alternatively, the anomaly detector circuitry 125 may be instantiated by any other combination of hardware, software, and/or firmware. For example, the anomaly detector circuitry 125 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

In some examples, the apparatus includes means for triggering a protection response. For example, the means for triggering a protection response may be implemented by response initiator circuitry 130. In some examples, the response initiator circuitry 130 may be instantiated by programmable circuitry such as the example programmable circuitry 712 of FIG. 7. For instance, the response initiator circuitry 130 may be instantiated by the example microprocessor 900 of FIG. 9 executing machine executable instructions such as those implemented by at least block 250 of FIG. 2. In some examples, the response initiator circuitry 130 may be instantiated by hardware logic circuitry, which may be implemented by an ASIC, XPU, or the FPGA circuitry 1000 of FIG. 10 structured to perform operations corresponding to the machine readable instructions. Additionally or alternatively, the response initiator circuitry 130 may be instantiated by any other combination of hardware, software, and/or firmware. For example, the response initiator circuitry 130 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

While an example manner of implementing the malware detector circuitry 105 is illustrated in FIG. 1, one or more of the elements, processes and/or devices illustrated in FIG. 1 may be combined, divided, re-arranged, omitted, eliminated and/or implemented in any other way. Further, the example model identifier circuitry 110, the example behavior data identifier circuitry 115, the example tuner circuitry 120, the example anomaly detector circuitry 125, the example response initiator circuitry 130, and/or, more generally, the example malware detector circuitry 105 of FIG. 1 may be implemented by hardware, software, firmware and/or any combination of hardware, software and/or firmware. Thus, for example, any of the example model identifier circuitry 110, the example behavior data identifier circuitry 115, the example tuner circuitry 120, the example anomaly detector circuitry 125, the example response initiator circuitry 130, and/or, more generally, the example malware detector circuitry 105 of FIG. 1 could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s), ASIC(s)), programmable logic device(s) (PLD(s)), and/or field programmable logic device(s) (FPLD(s)) such as FPGAs. Further still, the malware detector circuitry 105 of FIG. 1 may include one or more elements, processes, and/or devices in addition to, or instead of, those illustrated in FIG. 1, and/or may include more than one of any or all of the illustrated elements, processes and devices.

Flowcharts representative of example machine readable instructions, which may be executed by programmable circuitry to implement and/or instantiate the malware detector circuitry 105 of FIG. 1 and/or representative of example operations which may be performed by programmable circuitry to implement and/or instantiate the computing system 150 of FIG. 1, are shown in FIGS. 2-4. The machine readable instructions may be one or more executable programs or portion(s) of one or more executable programs for execution by programmable circuitry, such as the programmable circuitry 712, 812 shown in the example processor platform(s) 700, 800 discussed below in connection with FIGS. 7-8 and/or may be one or more function(s) or portion(s) of functions to be performed by the example programmable circuitry (e.g., an FPGA) discussed below in connection with FIGS. 9 and/or 10. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowcharts illustrated in FIGS. 2-4, many other methods of implementing the example malware detector circuitry 105 of FIG. 1 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 2-4 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

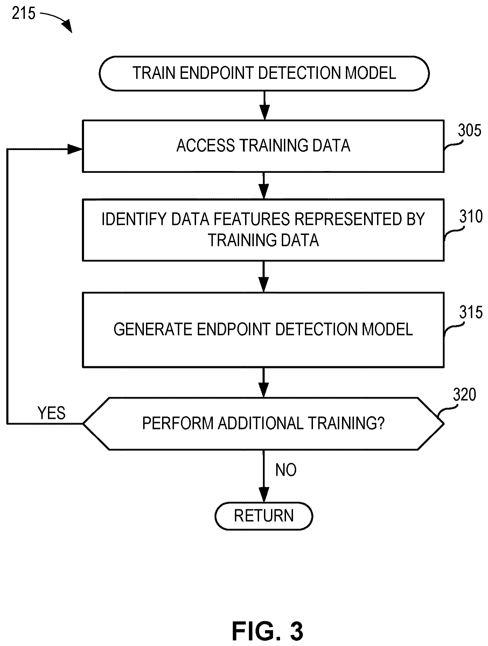

FIG. 2 is a flowchart representative of example machine-readable instructions and/or example operations 200 that may be executed, instantiated, and/or performed by example programmable circuitry to implement the example malware detector circuitry 105 of FIG. 1. The machine-readable instructions and/or the operations 200 of FIG. 2 begin at block 205, at which the model identifier circuitry 110 identifies an endpoint detection model (e.g., endpoint detection model 168 of FIG. 1). For example, the endpoint detection model can be used for monitoring and responding to potential malware-based threats on endpoints, as well as collecting data associated with endpoint activities. In some examples, the model identifier circuitry 110 determines whether the endpoint detection model has been trained, at block 210. If the model identifier circuitry 110 determines that the endpoint detection model is not trained or requires further training to obtain a pre-trained endpoint detection model, control proceeds to block 215 to proceed with training of the endpoint detection model, as described in more detail in connection with FIG. 3.

Once endpoint detection model training is completed, the tuner circuitry 120 determines whether to perform additional training of the pre-trained model (e.g., fine-tuning the model using a smaller, more specific dataset), at block 220. If the tuner circuitry 120 determines to proceed with additional training, the tuner circuitry 120 updates the pre-trained endpoint detection model using fine-tuning, at block 225. For example, as described in more detail in connection with FIG. 4, the tuner circuitry 120 performs local fine-tuning using LoRA. The anomaly detector circuitry 125 loads the fine-tuned endpoint detection model, at block 230, and proceeds to monitor behavior data associated with a given device, at block 235. For example, the anomaly detector circuitry 125 monitors second behavior data associated with a device (e.g., file access patterns, network activity, system interaction, etc.) and determines whether any anomalies are present based on the fine-tuned, pre-trained endpoint detection model. If the anomaly detector circuitry 125 identifies an anomaly in the second behavior data, at block 240, the response initiator circuitry 130 determines whether the anomaly corresponds to malware activity (e.g., activities associated with potential data exfiltration, data corruption, etc.), at block 245. If malware activity is detected, the response initiator circuitry 130 triggers a protection response (e.g., quarantining suspicious files, blocking malicious network connections, etc.) to mitigate the risk of a malware-based attack, at block 250.

FIG. 3 is a flowchart representative of example machine readable instructions and/or example operations 215 that may be executed, instantiated, and/or performed by programmable circuitry to implement the example malware detector circuitry 105 of FIG. 1. The machine-readable instructions and/or the operations 215 of FIG. 2 begin at block 305, at which the model identifier circuitry accesses training data 158. The training data 158 can include results from endpoint detection model training. In some examples, the training data is labeled. In some examples, the training data is sub-divided such that a portion of the data is used for validation purposes. The trainer 162 identifies data features represented by the training data 158, at block 310. In some examples, the training controller 160 instructs the trainer 162 to perform training of the neural network using the training data 158 to generate the endpoint detection model 168, at block 315. In some examples, additional training is performed to refine the endpoint detection model 168, at block 320.

FIG. 4 is a flowchart representative of example machine-readable instructions and/or example operations 225 that may be executed, instantiated, and/or performed by example programmable circuitry to implement the example malware detector circuitry 105 of FIG. 1 to update the endpoint detection model 168 using fine-tuning. The machine-readable instructions and/or the operations 225 of FIG. 4 begin at block 405, at which the tuner circuitry 120 integrates fine-tuning layers into the endpoint detection model. For example, the tuner circuitry 120 integrates LoRA layers into the pre-trained endpoint detection model 168 to enable efficient local fine-tuning, allowing the use of pre-existing labeled data more effectively by adapting the pre-trained LLM to the available labeled dataset. Once the LoRA layers are integrated into the pre-trained endpoint detection model, the behavior data identifier circuitry 115 collects first behavior data associated with a given device (e.g., file access patterns, network activity, system interaction, etc.), at block 410. The tuner circuitry 120 proceeds to perform local fine-tuning of the endpoint detection model based on the collected first behavior data, at block 415. Subsequently, the tuner circuitry 120 integrates the fine-tuned parameters into the endpoint detection model (e.g., parameters within the pre-trained model are adjusted through training on a specialized dataset), at block 420.

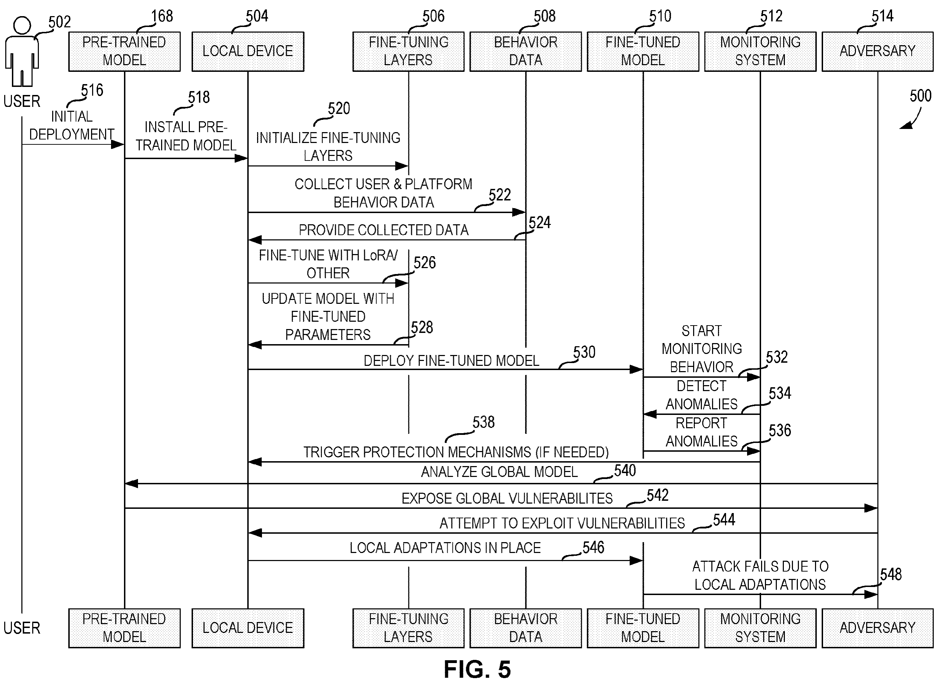

FIG. 5 illustrates an example process execution sequence diagram 500 for deployment of a fine-tuned endpoint detection model for monitoring of data anomalies in accordance with teachings of this disclosure. In the example of FIG. 5, a user 502 initiates deployment (e.g., initial deployment 516) of a pre-trained model (e.g., pre-trained endpoint detection model 168), which is installed (e.g., install pre-trained model 518) on a local device 504. In some examples, the model identifier circuitry 110 of FIG. 1 initiates the deployment of the pre-trained endpoint detection model 168 on the local device 504, as described in connection with FIG. 2. The tuner circuitry 120 proceeds to initialize the fine-tuning layers 506 (e.g., initialize fine-tuning layers 520). For example, the fine-tuning layer initialization can be performed using LoRA, but is not limited to this fine-tuning technique. The behavior data identifier circuitry 115 collects first behavior data (e.g., collect user and/or platform behavior data 522) associated with behavior data 508 and provides the behavior data (e.g., provide collected data 524) to the local device 504. The tuner circuitry 120 fine-tunes the pre-trained endpoint detection model 168 using a fine-tuning technique (e.g., fine-tune with LoRA 526) to update the fine-tuning layers 506 and updates the endpoint detection model 168 with the fine-tuned parameters (e.g., update model with fine-tuned parameters 528) on the local device 504. The anomaly detector circuitry 125 deploys the fine-tuned model 510 to initiate monitoring of data anomalies using the fine-tuned model (e.g., deploy the fine-tuned model 530). The fine-tuned model monitors, detects, and reports anomalies as part of a monitoring system 512 (e.g., start monitoring behavior 532, detect anomalies 534, report anomalies 536). In some examples, the response initiator circuitry 130 triggers protection mechanisms on the local device 504 (e.g., trigger protection mechanisms 538). In some examples, as part of an adversary-based attack, an adversary 514 performs analysis of the global model to identify malicious code that can be used to deceive the classifiers of the pre-trained model (e.g., analyze global model 540). Based on the global model analysis, the adversary 514 exposes any global vulnerabilities and attempts to exploit those identified vulnerabilities on the local device 504 (e.g., expose global vulnerabilities 542, attempt to exploit vulnerabilities 544). Due to local pre-trained model adaptations (e.g., local adaptations in place 546) performed using the malware detector circuitry 105 of FIG. 1 based on layer fine-tuning (e.g., using LoRA), the local adaptations provide a security mechanism for preventing potential malware attacks from the adversary 514 (e.g., attack fails due to local adaptations 548).

FIG. 6 illustrates an example arrangement 600 of training and inference phases associated with the malware detector circuitry 105 of FIG. 1, including an example response to an adversary attack. In the example of FIG. 6, a training phase 605 and an inference phase 601 are integrated into the endpoint detection model training and deployment performed using the malware detector circuitry 105. In the training phase 605, the model identifier circuitry 110 identifies a pre-trained AI endpoint detection model (e.g., pre-trained AI endpoint detection 620) and the tuner circuitry performs initialization of fine-tuning layers (e.g., LoRA layers initialization 625), followed by behavior data collection initiated using the behavior data identifier circuitry 115 (e.g., user and platform behavior data collection 630). The tuner circuitry 120 performs fine-tuning of the integrated fine-tuning layers (e.g., fine-tuning with LoRA 635) based on the behavior data collection. Subsequently, the tuner circuitry 120 updates the model through integration of fine-tuned parameters into the endpoint detection model (e.g., model updating 640). The anomaly detector circuitry 125 and the response initiator circuitry 130 perform the inference phase 610 associated with the fine-tuned, pre-trained endpoint detection model deployment (e.g., fine-tuned model loading 645). For example, the anomaly detector circuitry 125 initiates monitoring of data (e.g., behavior monitoring 650) to detect changes in user-based and/or platform-based usage patterns.

In examples disclosed herein, personalized device protection is achieved through local fine-tuning of the endpoint detection model (e.g., using LoRA), to significantly enhance malware detection. By starting with a globally pre-trained malware detection model, the malware detector circuitry 105 integrates LoRA layers into the model for efficient local fine-tuning. As previously described, the collected local behavior data is used to fine-tune the model, adapting the model to the unique characteristics of the local environment. The fine-tuned model proceeds to continuously monitor activities in real-time, allowing for detection of any anomalies that deviate from the normal behavior patterns learned during fine-tuning.

For example, changes in the user-based and/or platform-based usage patterns can be initiated by an adversary attack 615. The adversary attack 615 includes performing an analysis of the global endpoint detection model (e.g., global model analysis 665), identifying vulnerabilities in the global model (e.g., global vulnerabilities identification 670), and attempting to exploit the identified vulnerabilities (e.g., attempted exploitation of vulnerabilities on the local device 675). However, when local adaptations of the endpoint detection model are in place based on use of local fine-tuning techniques, the adversary attack fails (e.g., attack failure due to local adaptations 680). For example, the anomaly detector circuitry 125 identifies anomalies associated with the collected data (e.g., anomaly detection 655) resulting from the adversary attack 615. Based on presence of data anomalies, the response initiator circuitry 130 triggers detection and protection mechanisms (e.g., protection mechanisms 660) to mitigate the risk of a malware attack (e.g., blocking malicious network connections, etc.).

FIG. 7 is a block diagram of an example programmable circuitry platform 700 structured to execute and/or instantiate the example machine-readable instructions and/or the example operations of FIGS. 2 and 4 to implement the example malware detector circuitry 105 of FIG. 1. The programmable circuitry platform 700 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 700 of the illustrated example includes programmable circuitry 712. The programmable circuitry 712 of the illustrated example is hardware. For example, the programmable circuitry 712 can be implemented by one or more integrated circuits, logic circuits, FPGAs microprocessors, CPUs, GPUs, DSPs, and/or microcontrollers from any desired family or manufacturer. The programmable circuitry 712 may be implemented by one or more semiconductor based (e.g., silicon based) devices. In this example, the processor circuitry 712 implements the model identifier circuitry 110, the behavior data identifier circuitry 115, the tuner circuitry 120, the anomaly detector circuitry 125, and the response initiator circuitry 130.

The programmable circuitry 712 of the illustrated example includes a local memory 713 (e.g., a cache, registers, etc.). The programmable circuitry 712 of the illustrated example is in communication with a main memory including a volatile memory 714 and a non-volatile memory 716 by a bus 718. The volatile memory 714 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 716 may be implemented by flash memory and/or any other desired type of memory device. Access to the main memory 714, 716 of the illustrated example is controlled by a memory controller 717. In some examples, the memory controller 717 may be implemented by one or more integrated circuits, logic circuits, microcontrollers from any desired family or manufacturer, or any other type of circuitry to manage the flow of data going to and from the main memory 714, 716.

The programmable circuitry platform 700 of the illustrated example also includes interface circuitry 720. The interface circuitry 720 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 722 are connected to the interface circuitry 720. The input device(s) 722 permit(s) a user (e.g., a human user, a machine user, etc.) to enter data and/or commands into the programmable circuitry 712. The input device(s) 722 can be implemented by, for example, an audio sensor, a microphone, a camera (still or video), a keyboard, a button, a mouse, a touchscreen, a track-pad, a trackball, an isopoint device, and/or a voice recognition system.

One or more output devices 724 are also connected to the interface circuitry 720 of the illustrated example. The output devices 724 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 720 of the illustrated example, thus, typically includes a graphics driver card, a graphics driver chip, and/or graphics processor circuitry such as a GPU.

The interface circuitry 720 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 726. The communication can be by, for example, an Ethernet connection, a digital subscriber line (DSL) connection, a telephone line connection, a coaxial cable system, a satellite system, a line-of-site wireless system, a cellular telephone system, an optical connection, etc.

The programmable circuitry platform 700 of the illustrated example also includes one or more mass storage devices 728 to store software and/or data. Examples of such mass storage devices 728 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine executable instructions 732, which may be implemented by the machine readable instructions of FIGS. 2 and 4, may be stored in the mass storage device 728, in the volatile memory 714, in the non-volatile memory 716, and/or on at least one non-transitory computer readable storage medium such as a CD or DVD which may be removable.

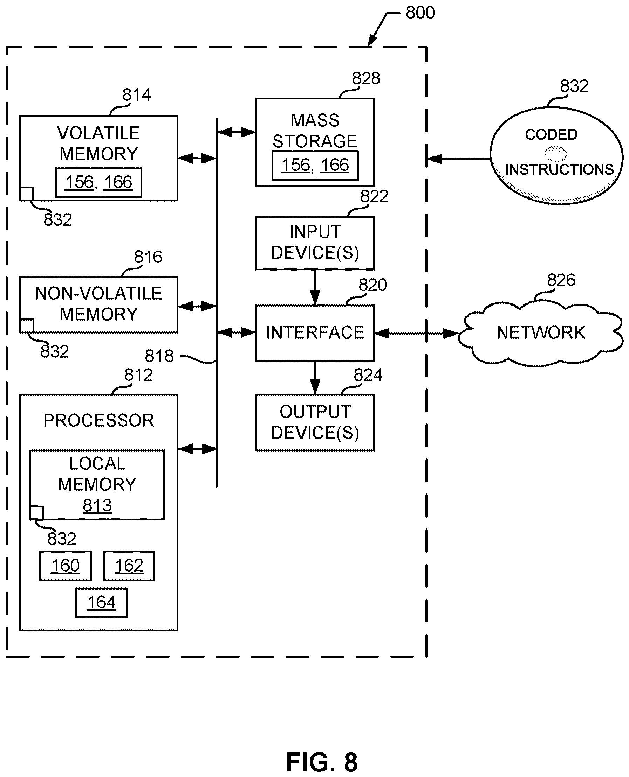

FIG. 8 is a block diagram of an example programmable circuitry platform 800 structured to execute and/or instantiate the example machine-readable instructions and/or the example operations of FIG. 3 to implement the example computing system 150 of FIG. 1. The programmable circuitry platform 800 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 800 of the illustrated example includes programmable circuitry 812. The programmable circuitry 812 of the illustrated example is hardware. For example, the programmable circuitry 812 can be implemented by one or more integrated circuits, logic circuits, FPGAs microprocessors, CPUs, GPUs, DSPs, and/or microcontrollers from any desired family or manufacturer. The programmable circuitry 812 may be implemented by one or more semiconductor based (e.g., silicon based) devices. In this example, the programmable circuitry 812 implements the example neural network processor 164, the example trainer 162, and the example training controller 160.

The programmable circuitry 812 of the illustrated example includes a local memory 813 (e.g., a cache, registers, etc.). The programmable circuitry 812 of the illustrated example is in communication with a main memory including a volatile memory 814 and a non-volatile memory 816 by a bus 818. The volatile memory 814 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 816 may be implemented by flash memory and/or any other desired type of memory device. Access to the main memory 814, 816 of the illustrated example is controlled by a memory controller 817. In some examples, the memory controller 817 may be implemented by one or more integrated circuits, logic circuits, microcontrollers from any desired family or manufacturer, or any other type of circuitry to manage the flow of data going to and from the main memory 814, 816.

The programmable circuitry platform 800 of the illustrated example also includes interface circuitry 820. The interface circuitry 820 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 822 are connected to the interface circuitry 820. The input device(s) 822 permit(s) a user (e.g., a human user, a machine user, etc.) to enter data and/or commands into the programmable circuitry 812. The input device(s) 822 can be implemented by, for example, an audio sensor, a microphone, a camera (still or video), a keyboard, a button, a mouse, a touchscreen, a track-pad, a trackball, an isopoint device, and/or a voice recognition system.

One or more output devices 824 are also connected to the interface circuitry 820 of the illustrated example. The output devices 824 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 820 of the illustrated example, thus, typically includes a graphics driver card, a graphics driver chip, and/or graphics processor circuitry such as a GPU.

The interface circuitry 820 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 826. The communication can be by, for example, an Ethernet connection, a digital subscriber line (DSL) connection, a telephone line connection, a coaxial cable system, a satellite system, a line-of-site wireless system, a cellular telephone system, an optical connection, etc.

The programmable circuitry platform 800 of the illustrated example also includes one or more mass storage devices 828 to store software and/or data. Examples of such mass storage devices 828 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine executable instructions 832, which may be implemented by the machine readable instructions of FIG. 3, may be stored in the mass storage device 828, in the volatile memory 814, in the non-volatile memory 816, and/or on at least one non-transitory computer readable storage medium such as a CD or DVD which may be removable.

FIG. 9 is a block diagram of an example implementation of the programmable circuitry 712, 812 of FIGS. 7-8. In this example, the programmable circuitry 712, 812 of FIGS. 7-8 is implemented by a microprocessor 900. For example, the microprocessor 900 may be a general purpose microprocessor (e.g., general purpose microprocessor circuitry). The microprocessor 900 executes some or all of the machine readable instructions of the flowcharts of FIGS. 2-4 to effectively instantiate the circuitry of FIG. 1 logic circuits to perform the operations corresponding to those machine readable instructions. In some such examples, the circuitry of FIG. 1 is instantiated by the hardware circuits of the microprocessor 900 in combination with the instructions. For example, the microprocessor 900 may implement multi-core hardware circuitry such as a CPU, a DSP, a GPU, an XPU, etc. Although it may include any number of example cores 902 (e.g., 1 core), the microprocessor 900 of this example is a multi-core semiconductor device including N cores. The cores 902 of the microprocessor 900 may operate independently or may cooperate to execute machine readable instructions. For example, machine code corresponding to a firmware program, an embedded software program, or a software program may be executed by one of the cores 902 or may be executed by multiple ones of the cores 902 at the same or different times. In some examples, the machine code corresponding to the firmware program, the embedded software program, or the software program is split into threads and executed in parallel by two or more of the cores 902. The software program may correspond to a portion or all of the machine readable instructions and/or operations represented by the flowcharts of FIGS. 2-4.

The cores 902 may communicate by a first example bus 904. In some examples, the first bus 904 may implement a communication bus to effectuate communication associated with one(s) of the cores 902. For example, the first bus 904 may implement at least one of an Inter-Integrated Circuit (I2C) bus, a Serial Peripheral Interface (SPI) bus, a PCI bus, or a PCIe bus. Additionally or alternatively, the first bus 904 may implement any other type of computing or electrical bus. The cores 902 may obtain data, instructions, and/or signals from one or more external devices by example interface circuitry 906. The cores 902 may output data, instructions, and/or signals to the one or more external devices by the interface circuitry 906. Although the cores 902 of this example include example local memory 920 (e.g., Level 1 (L1) cache that may be split into an L1 data cache and an L1 instruction cache), the microprocessor 900 also includes example shared memory 910 that may be shared by the cores (e.g., Level 2 (L2_cache)) for high-speed access to data and/or instructions. Data and/or instructions may be transferred (e.g., shared) by writing to and/or reading from the shared memory 910. The local memory 920 of each of the cores 902 and the shared memory 910 may be part of a hierarchy of storage devices including multiple levels of cache memory and the main memory (e.g., the main memory 814, 816 of FIG. 8). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 902 may be referred to as a CPU, DSP, GPU, etc., or any other type of hardware circuitry. Each core 902 includes control unit circuitry 914, arithmetic and logic (AL) circuitry (sometimes referred to as an ALU) 916, a plurality of registers 918, the L1 cache 920, and a second example bus 922. Other structures may be present. For example, each core 902 may include vector unit circuitry, single instruction multiple data (SIMD) unit circuitry, load/store unit (LSU) circuitry, branch/jump unit circuitry, floating-point unit (FPU) circuitry, etc. The control unit circuitry 914 includes semiconductor-based circuits structured to control (e.g., coordinate) data movement within the corresponding core 902. The AL circuitry 916 includes semiconductor-based circuits structured to perform one or more mathematic and/or logic operations on the data within the corresponding core 902. The AL circuitry 916 of some examples performs integer-based operations. In other examples, the AL circuitry 916 also performs floating-point operations. In yet other examples, the AL circuitry 916 may include first AL circuitry that performs integer-based operations and second AL circuitry that performs floating point operations. In some examples, the AL circuitry 916 may be referred to as an Arithmetic Logic Unit (ALU).

The registers 918 are semiconductor-based structures to store data and/or instructions such as results of one or more of the operations performed by the AL circuitry 916 of the corresponding core 902. For example, the registers 918 may include vector register(s), SIMD register(s), general purpose register(s), flag register(s), segment register(s), machine specific register(s), instruction pointer register(s), control register(s), debug register(s), memory management register(s), machine check register(s), etc. The registers 918 may be arranged in a bank as shown in FIG. 9. Alternatively, the registers 918 may be organized in any other arrangement, format, or structure including distributed throughout the core 902 to shorten access time. The second bus 922 may be implemented by at least one of an I2C bus, a SPI bus, a PCI bus, or a PCIe bus.

Each core 902 and/or, more generally, the microprocessor 900 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 900 is a semiconductor device fabricated to include many transistors interconnected to implement the structures described above in one or more integrated circuits (ICs) contained in one or more packages.

The microprocessor 900 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 900, in the same chip package as the microprocessor 900 and/or in one or more separate packages from the microprocessor 900.

FIG. 10 is a block diagram of another example implementation of the programmable circuitry of FIGS. 7-8. In this example, the programmable circuitry 712, 812 is implemented by FPGA circuitry 1000. For example, the FPGA circuitry 1000 may be implemented by an FPGA. The FPGA circuitry 1000 can be used, for example, to perform operations that could otherwise be performed by the example microprocessor 900 of FIG. 9 executing corresponding machine readable instructions. However, once configured, the FPGA circuitry 1000 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 900 of FIG. 9 described above (which is a general purpose device that may be programmed to execute some or all of the machine readable instructions represented by the flowcharts of FIGS. 2-4 but whose interconnections and logic circuitry are fixed once fabricated), the FPGA circuitry 1000 of the example of FIG. 10 includes interconnections and logic circuitry that may be configured, structured, programmed, and/or interconnected in different ways after fabrication to instantiate, for example, some or all of the operations/functions corresponding to the machine readable instructions represented by the flowcharts of FIGS. 2-4. In particular, the FPGA 1000 may be thought of as an array of logic gates, interconnections, and switches. The switches can be programmed to change how the logic gates are interconnected by the interconnections, effectively forming one or more dedicated logic circuits (unless and until the FPGA circuitry 1000 is reprogrammed). The configured logic circuits enable the logic gates to cooperate in different ways to perform different operations on data received by input circuitry. Those operations may correspond to some or all of the instructions (e.g., the software and/or firmware) represented by the flowcharts of FIGS. 2-4. As such, the FPGA circuitry 1000 may be configured and/or structured to effectively instantiate some or all of the operations/functions corresponding to the machine readable instructions of the flowcharts of FIGS. 2-4 as dedicated logic circuits to perform the operations/functions corresponding to those software instructions in a dedicated manner analogous to an ASIC. Therefore, the FPGA circuitry 1000 may perform the operations/functions corresponding to the some or all of the machine readable instructions of FIGS. 2-4 faster than the general-purpose microprocessor can execute the same.

In the example of FIG. 10, the FPGA circuitry 1000 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1000 of FIG. 10 may access and/or load the binary file to cause the FPGA circuitry 1000 of FIG. 10 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1000 of FIG. 10 to cause configuration and/or structuring of the FPGA circuitry 1000 of FIG. 10, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1000 of FIG. 10 may access and/or load the binary file to cause the FPGA circuitry 1000 of FIG. 10 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1000 of FIG. 10 to cause configuration and/or structuring of the FPGA circuitry 1000 of FIG. 10, or portion(s) thereof.

The FPGA circuitry 1000 of FIG. 10, includes example input/output (I/O) circuitry 1002 to obtain and/or output data to/from example configuration circuitry 1004 and/or external hardware 1006. For example, the configuration circuitry 1004 may be implemented by interface circuitry that may obtain a binary file, which may be implemented by a bit stream, data, and/or machine-readable instructions, to configure the FPGA circuitry 1000, or portion(s) thereof. In some such examples, the configuration circuitry 1004 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1006 may be implemented by external hardware circuitry. For example, the external hardware 1006 may be implemented by the microprocessor 900 of FIG. 9.

The FPGA circuitry 1000 also includes an array of example logic gate circuitry 1008, a plurality of example configurable interconnections 1010, and example storage circuitry 1012. The logic gate circuitry 1008 and the configurable interconnections 1010 are configurable to instantiate one or more operations/functions that may correspond to at least some of the machine readable instructions of FIGS. 2-4 and/or other desired operations. The logic gate circuitry 1008 shown in FIG. 10 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1008 to enable configuration of the electrical structures and/or the logic gates to form circuits to perform desired operations/functions. The logic gate circuitry 1008 may include other electrical structures such as look-up tables (LUTs), registers (e.g., flip-flops or latches), multiplexers, etc.

The configurable interconnections 1010 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1008 to program desired logic circuits.

The storage circuitry 1012 of the illustrated example is structured to store result(s) of the one or more of the operations performed by corresponding logic gates. The storage circuitry 1012 may be implemented by registers or the like. In the illustrated example, the storage circuitry 1012 is distributed amongst the logic gate circuitry 1008 to facilitate access and increase execution speed.

The example FPGA circuitry 1000 of FIG. 10 also includes example dedicated operations circuitry 1014. In this example, the dedicated operations circuitry 1014 includes special purpose circuitry 1016 that may be invoked to implement commonly used functions to avoid the need to program those functions in the field. Examples of such special purpose circuitry 1016 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1000 may also include example general purpose programmable circuitry 1018 such as an example CPU 1020 and/or an example DSP 1022. Other general purpose programmable circuitry 1018 may additionally or alternatively be present such as a GPU, an XPU, etc., that can be programmed to perform other operations.

Although FIGS. 9 and 10 illustrate two example implementations of the programmable circuitry 712, 812 of FIGS. 7-8, many other approaches are contemplated. For example, FPGA circuitry may include an on-board CPU, such as one or more of the example CPU 1020 of FIG. 10. Therefore, the programmable circuitry 712, 812 of FIGS. 7-8 may additionally be implemented by combining at least the example microprocessor 900 of FIG. 9 and the example FPGA circuitry 1000 of FIG. 10. In some such hybrid examples, one or more cores 1002 of FIG. 10 may execute a first portion of the machine readable instructions represented by the flowchart(s) of FIGS. 2-4 to perform first operation(s)/function(s), the FPGA circuitry 1000 of FIG. 10 may be configured and/or structured to perform second operation(s)/function(s) corresponding to a second portion of the machine readable instructions represented by the flowcharts of FIGS. 2-4, and/or an ASIC may be configured and/or structured to perform third operation(s)/function(s) corresponding to a third portion of the machine readable instructions represented by the flowcharts of FIGS. 2-4.

It should be understood that some or all of the circuitry of FIG. 1 may, thus, be instantiated at the same or different times. For example, same and/or different portion(s) of the microprocessor 900 of FIG. 9 may be programmed to execute portion(s) of machine-readable instructions at the same and/or different times. In some examples, same and/or different portion(s) of the FPGA circuitry 1000 of FIG. 10 may be configured and/or structured to perform operations/functions corresponding to portion(s) of machine-readable instructions at the same and/or different times.

In some examples, some or all of the circuitry of FIG. 1 may be instantiated, for example, in one or more threads executing concurrently and/or in series. For example, the microprocessor 900 of FIG. 9 may execute machine readable instructions in one or more threads executing concurrently and/or in series. In some examples, the FPGA circuitry 1000 of FIG. 10 may be configured and/or structured to carry out operations/functions concurrently and/or in series. Moreover, in some examples, some or all of the circuitry of FIG. 1 may be implemented within one or more virtual machines and/or containers executing on the microprocessor 900 of FIG. 9.

In some examples, the programmable circuitry 712, 812 of FIGS. 7-8 may be in one or more packages. For example, the microprocessor 900 of FIG. 9 and/or the FPGA circuitry 1000 of FIG. 10 may be in one or more packages. In some examples, an XPU may be implemented by the programmable circuitry 712, 812 of FIGS. 7-8 which may be in one or more packages. For example, the XPU may include a CPU (e.g., the microprocessor 900 of FIG. 9, the CPU 1020 of FIG. 10, etc.) in one package, a DSP (e.g., the DSP 1022 of FIG. 10) in another package, a GPU in yet another package, and an FPGA (e.g., the FPGA circuitry 1000 of FIG. 10) in still yet another package.

A block diagram illustrating an example software distribution platform 1105 to distribute software such as the example machine readable instructions 732, 832 of FIGS. 7-8 to other hardware devices (e.g., hardware devices owned and/or operated by third parties from the owner and/or operator of the software distribution platform) is illustrated in FIG. 11. The example software distribution platform 1105 may be implemented by any computer server, data facility, cloud service, etc., capable of storing and transmitting software to other computing devices. The third parties may be customers of the entity owning and/or operating the software distribution platform 1105. For example, the entity that owns and/or operates the software distribution platform 1105 may be a developer, a seller, and/or a licensor of software such as the example machine readable instructions 732, 832 of FIGS. 7-8. The third parties may be consumers, users, retailers, OEMs, etc., who purchase and/or license the software for use and/or re-sale and/or sub-licensing. In the illustrated example, the software distribution platform 1105 includes one or more servers and one or more storage devices. The storage devices store the machine readable instructions 732, 832, which may correspond to the example machine readable instructions of FIGS. 2-4, as described above. The one or more servers of the example software distribution platform 1105 are in communication with an example network 1110, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 732, 832 from the software distribution platform 1105. For example, the software, which may correspond to the example machine readable instructions of FIGS. 2-4, may be downloaded to the example programmable circuitry platform 700, 800, which is to execute the machine readable instructions 732, 832 to implement the malware detector circuitry 105 of FIG. 1. In some examples, one or more servers of the software distribution platform 1105 periodically offer, transmit, and/or force updates to the software (e.g., the example machine readable instructions 732, 832 of FIGS. 7-8) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example, an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, methods, apparatus, and articles of manufacture disclosed herein present a robust and personalized device protection mechanism leveraging Low-Rank Adaptation (LoRA) for fine-tuning pre-trained AI models locally. In examples disclosed herein, endpoint AI-based model security is enhanced by incorporating user-specific and/or platform-specific observed behavior, making the model resilient against attacks that exploit global model vulnerabilities. Methods and apparatus disclosed herein allow for dynamic local adaptation of the AI model at an endpoint device to unique patterns of individual users and/or devices exhibited at that local device, ensuring a high level of security and personalization. As such, methods and apparatus disclosed herein address the vulnerability of globally pre-trained endpoint detection models to adversarial training by accounting for the unique behaviors and/or usage patterns of individual users and/or devices, resulting in different local models acting at different endpoints throughout the ecosystem. Thus, examples disclosed herein result in improvements to the operation of a machine and/or a network.

Example methods, apparatus, systems, and articles of manufacture for artificial intelligence model security protection using moving target defenses are disclosed herein. Further examples and combinations thereof include the following:
Example 1 includes an apparatus, comprising interface circuitry to obtain a pre-trained detection model, machine-readable instructions, and at least one processor circuit to be programmed by the machine-readable instructions to tune the pre-trained detection model based on first local behavior data, and execute the tuned detection model to detect an anomaly in second local behavior data associated with the apparatus.
Example 2 includes the apparatus of example 1, wherein the anomaly in the second behavior data is associated with potential malware activity.
Example 3 includes the apparatus of any of the proceeding examples, wherein the first local behavior data is associated with at least one of a network activity, a browser activity, a file access pattern, a system interaction, or an application activity.
Example 4 includes the apparatus of any of the proceeding examples, wherein the anomaly is malware activity, one or more of the at least one processor circuit is to trigger at least one of quarantining a file, blocking a network connection, or generating a malware alert.
Example 5 includes the apparatus of any of the proceeding examples, wherein one or more of the at least one processor circuit is to tune the pre-trained detection model based on Low-Rank Adaptation (LoRA).
Example 6 includes the apparatus of any of the proceeding examples, wherein the pre-trained detection model is an endpoint detection model.
Example 7 includes the apparatus of any of the proceeding examples, wherein at least one of the first local behavior data or the second local behavior data is associated with user behavior or platform behavior on the apparatus.
Example 8 includes at least one non-transitory machine-readable medium comprising machine-readable instructions to cause at least one processor circuit to at least tune a pre-trained detection model based on first local behavior data, and execute the tuned detection model to detect an anomaly in second local behavior data associated with an apparatus.
Example 9 includes the at least one non-transitory machine-readable medium of example 8, wherein the anomaly in the second behavior data is associated with potential malware activity.
Example 10 includes the at least one non-transitory machine-readable medium of any of the proceeding examples, wherein the first local behavior data is associated with at least one of a network activity, a browser activity, a file access pattern, a system interaction, or an application activity.
Example 11 includes the at least one non-transitory machine-readable medium of any of the proceeding examples, wherein the anomaly is malware activity, the machine-readable instructions are to cause one or more of the at least one processor circuit to trigger at least one of quarantining a file, blocking a network connection, generating a malware alert, or securing an application.
Example 12 includes the at least one non-transitory machine-readable medium of any of the proceeding examples, wherein the machine-readable instructions are to cause one or more of the at least one processor circuit to tune the pre-trained detection model based on Low-Rank Adaptation (LoRA).
Example 13 includes the at least one non-transitory machine-readable medium of any of the proceeding examples, wherein the pre-trained detection model is an endpoint detection model.
Example 14 includes the at least one non-transitory machine-readable medium of any of the proceeding examples, wherein at least one of the first local behavior data or the second local behavior data is associated with user behavior or platform behavior on the apparatus.
Example 15 includes an apparatus, comprising means for tuning a pre-trained detection model based on first local behavior data, and means for executing the tuned detection model to detect an anomaly in second local behavior data associated with the apparatus.
Example 16 includes the apparatus of example 15, wherein the anomaly in the second behavior data is associated with potential malware activity.
Example 17 includes the apparatus of any of the proceeding examples, wherein the first local behavior data is associated with at least one of a network activity, a browser activity, a file access pattern, a system interaction, or an application activity.
Example 18 includes the apparatus of any of the proceeding examples, wherein the anomaly is malware activity, further including means for triggering at least one of quarantining a file, blocking a network connection, generating a malware alert, or securing an application.
Example 19 includes the apparatus of any of the proceeding examples, wherein the means for tuning include tuning the pre-trained detection model based on Low-Rank Adaptation (LoRA).
Example 20 includes the apparatus of any of the proceeding examples, wherein the pre-trained detection model is an endpoint detection model.
Example 21 includes a method, comprising tuning a pre-trained detection model based on first local behavior data, and executing the tuned detection model to detect an anomaly in second local behavior data associated with an apparatus.
Example 22 includes the method of example 21, wherein the anomaly in the second behavior data is associated with potential malware activity.
Example 23 includes the method of any of the proceeding examples, wherein the first local behavior data is associated with at least one of a network activity, a browser activity, a file access pattern, a system interaction, or an application activity.
Example 24 includes the method of any of the proceeding examples, wherein the anomaly is malware activity, triggering at least one of quarantining a file, blocking a network connection, generating a malware alert, or securing an application.
Example 25 includes the method of any of the proceeding examples, including tuning the pre-trained detection model based on Low-Rank Adaptation (LoRA).
Example 26 includes the method of any of the proceeding examples, wherein the pre-trained detection model is an endpoint detection model.
Example 27 includes the method of any of the proceeding examples, wherein at least one of the first local behavior data or the second local behavior data is associated with user behavior or platform behavior on the apparatus.

The following claims are hereby incorporated into this Detailed Description by this reference. Although certain example systems, methods, apparatus, and articles of manufacture have been disclosed herein, the scope of coverage of this patent is not limited thereto. On the contrary, this patent covers all systems, methods, apparatus, and articles of manufacture fairly falling within the scope of the claims of this patent.

## Claims

1. An apparatus, comprising:
interface circuitry to obtain a pre-trained detection model;
machine-readable instructions; and
at least one processor circuit to be programmed by the machine-readable instructions to:
tune the pre-trained detection model based on first local behavior data; and
execute the tuned detection model to detect an anomaly in second local behavior data associated with the apparatus.

2. The apparatus of claim 1, wherein the anomaly in the second behavior data is associated with potential malware activity.

3. The apparatus of any preceding claim, wherein the first local behavior data is associated with at least one of a network activity, a browser activity, a file access pattern, a system interaction, or an application activity.

4. The apparatus of any preceding claim, wherein the anomaly is malware activity, one or more of the at least one processor circuit is to trigger at least one of quarantining a file, blocking a network connection, generating a malware alert, or securing an application.

5. The apparatus of any preceding claim, wherein one or more of the at least one processor circuit is to tune the pre-trained detection model based on Low-Rank Adaptation (LoRA).

6. The apparatus of any preceding claim, wherein the pre-trained detection model is an endpoint detection model.

7. The apparatus of any preceding claim, wherein at least one of the first local behavior data or the second local behavior data is associated with user behavior or platform behavior on the apparatus.

8. An apparatus, comprising:
means for tuning a pre-trained detection model based on first local behavior data; and
means for executing the tuned detection model to detect an anomaly in second local behavior data associated with the apparatus.

9. The apparatus of claim 8, wherein the anomaly in the second behavior data is associated with potential malware activity.

10. The apparatus of any preceding claim, wherein the first local behavior data is associated with at least one of a network activity, a browser activity, a file access pattern, a system interaction, or an application activity.

11. The apparatus of any preceding claim, wherein the anomaly is malware activity, further including means for triggering at least one of quarantining a file, blocking a network connection, generating a malware alert, or securing an application.

12. The apparatus of any preceding claim, wherein the means for tuning include tuning the pre-trained detection model based on Low-Rank Adaptation (LoRA).

13. The apparatus of any preceding claim, wherein the pre-trained detection model is an endpoint detection model.

14. The apparatus of any preceding claim, wherein at least one of the first local behavior data or the second local behavior data is associated with user behavior or platform behavior on the apparatus.

15. A computer program comprising instructions which, when the program is executed by a computer, cause the computer to carry out the method as claimed in any of claims 1 to 7.
